# EUROPÄISCHE PATENTSCHRIFT

(11) **EP 4 279 902 B1**
(45) Veröffentlichungstag und Bekanntmachung des Hinweises auf die Patenterteilung: **05.11.2025**
(21) Anmeldenummer: 22174700.9
(22) Anmeldetag: 20.05.2022
(51) Int. Cl.: G01N 21/09, G01N 21/3504, G01N 21/75, G01N 21/03, G01N 21/15, G01N 21/35

(54) **MESSZELLE ZUR UNTERSUCHUNG VON PROBEN MITTELS ELEKTROMAGNETISCHER STRAHLUNG**
MEASURING CELL FOR ANALYSING SAMPLES USING ELECTROMAGNETIC RADIATION
CELLULE DE MESURE DESTINÉE À L'EXAMEN D'ÉCHANTILLONS PAR RAYONNEMENT ÉLECTROMAGNÉTIQUE

(43) Veröffentlichungstag der Anmeldung: 22.11.2023
(73) Patentinhaber: Reacnostics GmbH, 20457 Hamburg (DE)
(72) Erfinder: HORN, Raimund, 21266 Jesteburg (DE)
(74) Vertreter: Eisenführ Speiser

(56) Entgegenhaltungen:
- WO-A1-2021/078817
- DE-A1- 19 910 291
- DANIEL C ET AL: "Spatially resolved catalysis in microstructured reactors by IR spectroscopy: CO oxidation over mono- and bifunctional Pt catalysts", JOURNAL OF CATALYSIS, ACADEMIC PRESS, DULUTH, MN, US, vol. 272, no. 1, 25 May 2010 (2010-05-25), pages 55 - 64, XP027051446, ISSN: 0021-9517, [retrieved on 20100514]
- DROCHNER A ET AL: "A New DRIFTS Cell for the In-Situ Investigation of Heterogeneously Catalyzed Reactions", CHEMICAL ENGINEERING & TECHNOLOGY, J. WILEY, HOBOKEN, USA, vol. 23, no. 4, 4 April 2000 (2000-04-04), pages 319 - 322, XP071788486, ISSN: 0930-7516, DOI: 10.1002/(SICI)1521-4125(200004)23:4<319::AID-CEAT319>3.0.CO;2-4
- BRAVO-SUAREZ J J ET AL: "Design characteristics of in situ and operando ultraviolet-visible and vibrational spectroscopic reaction cells for heterogeneous catalysis", CATALYSIS REVIEWS - SCIENCE AND ENGINEERING USA, vol. 59, no. 4, 2 October 2017 (2017-10-02), pages 295 - 445, XP009539694, ISSN: 0161-4940, DOI: 10.1080/01614940.2017.1360071

## Beschreibung

Die vorliegende Erfindung ist in Anspruch 1 definiert und betrifft eine Messzelle zur Untersuchung von Proben mittels elektromagnetischer Strahlung, insbesondere eine Messzelle für die Isopotenzial-Spektroskopie, und weiter bevorzugt eine Messzelle für die DRIFT-Spektroskopie im Rahmen der Isopotenzial-Spektroskopie.

Die Untersuchung von heterogen katalysierten Reaktionen ist wissenschaftlich und wirtschaftlich von großer Bedeutung. Allerdings handelt es sich bei Feststoffkatalysatoren um dynamische Systeme, welche ihre Struktur und Reaktivität in Wechselwirkung mit ihrer chemischen Umgebung verändern. Um Struktur-Wirkungsbeziehungen für solche Systeme zu erstellen, hat sich das Gebiet der operando Untersuchung katalytischer Reaktionen in jüngster Zeit stetig weiterentwickelt. Ziel ist stets die spektroskopische Bestimmung katalytischer Aktivitäten und Zustände unter tatsächlich in der Praxis auftretenden Reaktionsbedingungen. Jedoch besteht hier ein Zielkonflikt, da spektroskopische Methoden wie UV, EPR, IR, NMR, XRD etc. eine spezielle operando Messzelle erfordern, die z.B. für die angewandte elektromagnetische Strahlung durchlässig ist. Demgegenüber bestehen die in der industriellen Produktion für z.B. heterogen katalysierte Reaktionen eingesetzten Reaktoren in der Regel aus Stahl, der für solche Strahlung nicht durchlässig ist.

Um dieses Problem zu lösen, wurde die sog. Isopotenzial-Spektroskopie entwickelt bzw. weiterentwickelt, deren prinzipieller Ansatz darin besteht, die in einem industriellen Reaktor ablaufenden Reaktionen und herrschenden chemisch-physikalischen Reaktionsbedingungen in einer speziellen Messzelle außerhalb des Reaktors nachzustellen, wobei diese Messzelle für die Durchführung der gewünschten Untersuchungsmethode geeignet ist.

In Bezug auf den in diesem Zusammenhang relevanten Stand der Technik wird insbesondere auf die WO 2021/078817 A1 und den dort aufgeführten Stand der Technik sowie auf die DE 199 10 291 A1 verwiesen. Die DE 199 10 291 A1 beschreibt eine Messzelle zur Untersuchung von zwei oder mehr Proben unter möglichst identischen Bedingungen mittels elektromagnetischer Strahlung, insbesondere in der Infrarotspektroskopie, die ein Eintrittsfenster zum Eintritt von einfallender Strahlung, ein Austrittsfenster zum Austritt von gestreuter Strahlung sowie einen Probenhalter enthält. Der Probenhalter ist zur Aufnahme von mindestens zwei Proben geeignet und kann ohne Öffnen der Messzelle so bewegt werden, dass in dem Probenhalter befindliche Proben nacheinander einer durch das Eintrittsfenster einfallenden Strahlung ausgesetzt werden können. Die Messzelle eignet sich insbesondere für die In-situ-DRIFT-Spektroskopie von Katalysatoren für heterogen katalysierte Reaktionen. Die DE 199 10 291 A1 beschreibt auch ein Spektrometer, das eine solche Messzelle enthält, und ein Spektroskopieverfahren unter Einsatz einer solchen Messzelle.

Die WO 2021/078817 beschreibt den Einsatz der Isopotenzial-Spektroskopie bei operando Untersuchungen katalytischer Reaktionen und eine dafür geeignete Vorrichtung, die dadurch gekennzeichnet ist, dass sie einen Reaktor zur eigentlichen Durchführung der gewünschten Reaktion in größerem oder industriellem Maßstab aufweist, der mit einer Probeentnahmevorrichtung für Gase oder Flüssigkeiten aus dem Reaktorraum ausgestattet ist. Entlang des Katalysatorbetts können flüssige oder gasförmige Proben bei gleichzeitiger Temperaturbestimmung am Entnahmeort entnommen werden. Diese Proben werden über eine Verbindungsleitung in eine externe Messzelle überführt, welche den gleichen Katalysator wie der Produktionsreaktor enthält und die gleiche Temperatur im Messraum aufweist. Somit herrscht in der Messzelle die gleiche chemische Umgebung oder das gleiche chemische Reaktionspotenzial wie in dem eigentlichen Reaktor und es wird davon ausgegangen, dass dann in Reaktor und Messzelle die gleichen Reaktionsabläufe vorliegen.

Da die heterogen katalysierten Reaktionen auf der Katalysatoroberfläche ablaufen bzw. katalysiert werden, ist die Bestimmung der Oberflächenbelegung des Katalysators von entscheidender Bedeutung, um das Reaktionsgeschehen zu verstehen, zu beeinflussen und damit auch zu verbessern.

Mit der erfindungsgemäßen Messzelle können verschiedene spektroskopische Untersuchungen, wie z.B. IR-Spektroskopie oder DRIFTS, zur Untersuchung solcher heterogen katalysierten Reaktionen durchgeführt werden. Als besonders geeignet und erfindungsgemäß bevorzugt hat sich hierbei die sog. DRIFTS-Methode (Diffuse Reflexions-Infrarot-Fourier-Transformations-Spektroskopie) erwiesen. Für eine grundsätzliche Einführung in diese Methodik siehe E.H. Korte in Analytiker-Taschenbuch, Springer-Verlag, Berlin 1990, Band 9, S.91-123.

Messzellen für die DRIFT-Spektroskopie und Fourier-Transformations-IR-Spektrometer (FTIR-Spektrometer) in allgemeiner Form sowie Messzusätze für die DRIFT-Spektroskopie sind seit längerem bekannt und kommerziell erhältlich. Solche Messzusätze bzw. Messzellen umfassen insbesondere eine Optik, mit der einerseits einfallendes Infrarotlicht auf eine in ihrem Fokus befindliche Probe gebündelt werden kann und andererseits von dieser diffus gestreutes Infrarotlicht in einem möglichst großen Raumwinkelbereich aufgefangen und auf einen Detektor gebündelt oder in den Spektrometerstrahlengang zurückgeführt werden kann. Diese Optik ist meist als ein Spiegelsystem ausgebildet. Die DRIFT-Spektroskopie wird in erster Linie für qualitative Untersuchungen eingesetzt. Will man dagegen quantitative Ergebnisse erhalten, muss man eine Transformation des Spektrums der diffusen Reflexion mit Hilfe der Kubelka- Munk-Gleichung vornehmen.

Diese kommerziell erhältlichen Messzellen weisen allerdings verschiedene Nachteile auf und sind insbesondere nicht speziell für die beschriebene Isopotenzial-Spektroskopie geeignet und ausgerüstet. So ist z.B. nur der Probentiegel einer solchen Messzelle beheizt, sodass die verschiedenen in der Messzelle befindlichen Substanzen (sowohl Edukte als auch Produkte) an den Spektralfenstern kondensieren und eine Messung deutlich erschweren können. Die Zellen weisen zum Teil ein sehr großes Totvolumen auf, das die Entstehung von unerwünschten Bypass-Strömungen begünstigt. Die Edukte können in Kontakt mit heißen Metallteilen (wie z.B. mit den eingesetzten Heizpatronen) geraten, wodurch die aufgenommenen Spektren hohe Hintergrundbeiträge aufweisen, welche eine Auswertung deutlich erschweren bzw. eine Auswertung in Kombination mit der Profilmessung unmöglich machen, weil das gleiche chemische Potenzial nicht mehr gegeben ist. Besonders nachteilig ist der Umstand, dass meist nur ein oder maximal 2 Probentiegel unter den gleichen Prozessbedingungen gemessen werden können, wodurch keine vollständige Analyse der aufgenommenen Spektren nach der Kubelka-Munk-Methodik möglich ist (Subtraktion verschiedener aufgenommener Spektren, um zu dem gewünschten Spektrum ohne Hintergrundbeiträge zu gelangen.

Die Quantifizierung von IR-Spektren in diffuser Reflexion erfolgt mittels der Kubelka-Munk-Gleichung und basiert auf einem Abgleich der detektierten Strahlungsintensität mit der einer Referenzsubstanz. Dies ist notwendig, da die Bandenintensität und auch das Untergrundspektrum unter anderem von den Messbedingungen wie beispielsweise der Zusammensetzung der Probenraumatmosphäre (Gehalt an Kohlenstoffdioxid und Wasser) und der Probenvorbereitung beeinflusst wird. Darüber hinaus ist die Lage der Basislinie von der Temperatur und dem Druck (durch veränderte Streuungskoeffizienten) (Appl. Spectrosc. Rev. 2002, 37, 347-364, doi:10.1081/ASR-120016081) abhängig. Daher ist es notwendig Proben- und Referenzspektrum unter exakt identischen Bedingungen aufzuzeichnen d.h. unmittelbar nacheinander. Dies schränkt die Durchführung von kinetischen Studien in Zellen mit nur einem Probenbehälter und deren Auswertung erheblich ein (ACS Publications, 1993, pp. 351-375).

Aufgabe der vorliegenden Erfindung war somit die Bereitstellung einer in verschiedener Hinsicht verbesserten Messzelle für die Untersuchung von Proben mit spektroskopischen Methoden bzw. mit elektromagnetischer Strahlung. Insbesondere sollte eine verbesserte Messzelle für die Untersuchung von Proben heterogen katalysierter Reaktionen mit der DRIFT-Spektroskopie bereitgestellt werden. Deren Verwendbarkeit für in operando Studien im Rahmen der Isopotenzial-Spektroskopie sollte ebenfalls nach Möglichkeit gewährleistet sein.

Gelöst wird diese Aufgabe durch eine Messzelle gemäß Anspruch 1 und deren besonderen Ausgestaltungen gemäß den entsprechenden Unteransprüchen.

Nachfolgend wird die Erfindung anhand der Figuren 1 - 8 und deren Beschreibung näher erläutert, ohne darauf beschränkt zu sein. Diese Beschreibung bezieht sich insbesondere auf bevorzugte Ausführungsformen.
Fig. 1 zeigt eine erfindungsgemäße Messzelle 100 für die Isopotenzial-DRIFT-Spektroskopie.
Fig. 2 zeigt einen Längsschnitt durch die Messzelle 100.
Fig. 3 zeigt einen Probenteller 8 der Messzelle 100.
Fig. 4, 5 und 6 zeigen verschiedene Ansichten und Merkmale der Spektroskopiekammern 10 der Messzelle 100.
Fig. 7 und 8 zeigen den Deckel 13 der Spektroskopiekammer 10.

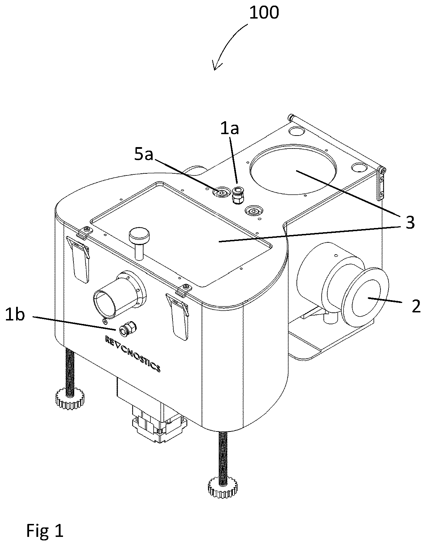

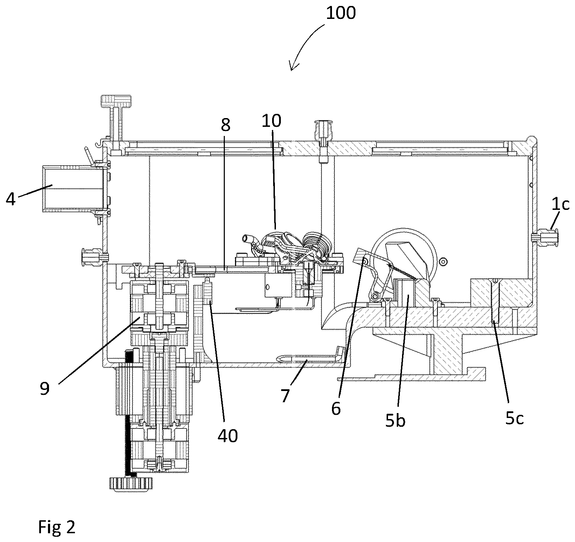

Das Gehäuse der Messzelle (Fig. 1 und 2) besteht bevorzugt aus eloxiertem Aluminium und kann direkt in den Strahlengang des IR-Spektrometers platziert werden. Es stellt einen in sich abgeschlossenen Probenraum dar. Durch Spülgasanschlüsse für Inertgas (1a-c) ist sichergestellt, dass die Atmosphäre innerhalb des Raumes während der gesamten Messzeit konstant gehalten werden kann und somit Schwankungen in Temperatur und Wasserdampf-, sowie Kohlenstoffdioxidkonzentrationen außerhalb des Gehäuses keinen Einfluss auf resultierende IR-Spektren nehmen. An der linken und rechten Flanke enthält das Gehäuse eine Durchführung mit Teleskoparm (2), sodass es an ein handelsübliches FTIR Spektrometer angeschlossen werden kann. Der Deckel enthält außerdem Fenster bevorzugt aus Acrylglas (3), welche zur Beobachtung des Probenraumes dienen, sowie einen Anschluss für beheizte Gasleitungen (4).

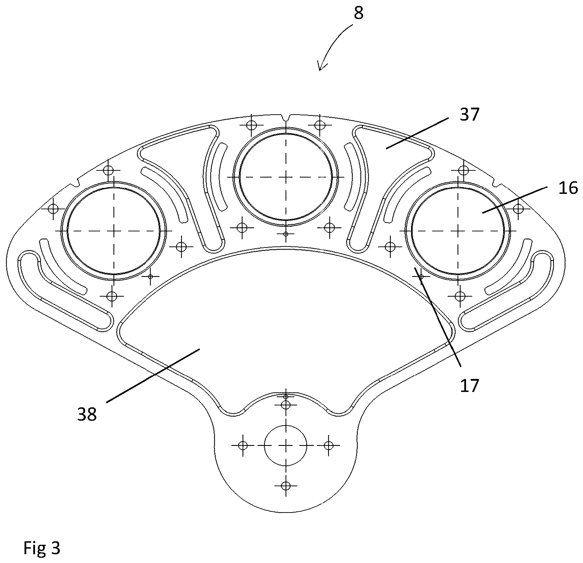

Im Gehäuse platziert ist, neben Bohrungen für ein handelsübliches, optisches Spiegelsystem zur Aufnahme von DRIFTS Spektren (5a-c), eine Arretierung (6) inkl. Servomotor (7), die zum Ausrichten und Fixieren des Probentellers (8) in horizontaler Position dient. Der Probenteller (Fig. 3) besteht bevorzugt aus Aluminium, ist auf einem Dreh-/Hub-Aktor (9) ebenfalls in dem Gehäuse verbaut und fungiert als Halter für drei untereinander identische Spektroskopiekammern (10).

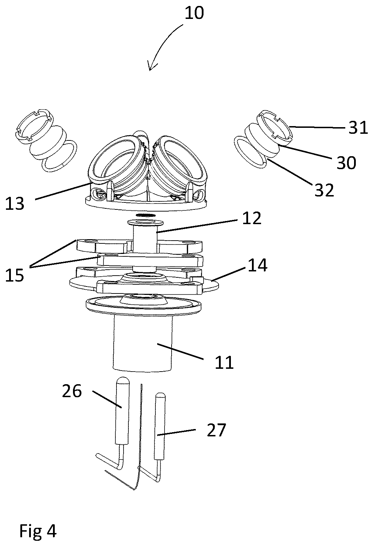

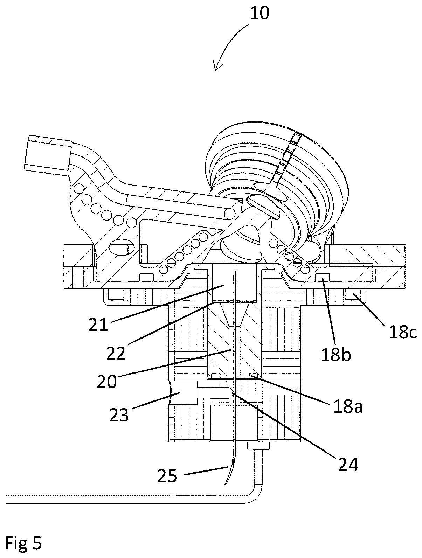

Eine solche Spektroskopiekammer (Fig. 4 und 5) besteht aus drei Bauteilen: einem Unterbau (11), einem Probentiegel (12) und einem kuppelförmigen Deckel (13). Alle Teile sind während der Messung über eine Klemmplatte (14) und zwei Klemmen (15) sowohl miteinander, als auch mit dem Probenteller fest verbunden. Dazu wird der Unterbau in eine Vertiefung (16) in den Probenteller gelegt und anschließend die Klemmplatte mittels eines Passstifts (17) auf dem Probenteller positioniert. Der Probentiegel wird durch die Klemmplatte in den Unterbau eingeführt und mittels Deckel, der im zusammengebauten Zustand auf die Ränder des Tiegels drückt, an den Unterbau angepresst. Jedes der drei Bauteile verfügt über einen ringförmigen Hohlraum (18a-c), in dem sich jeweils ein O-Ring befindet. Diese lassen im zusammengebauten Zustand das Innere der Zelle gegenüber der Umgebung (18b, c) gasdicht werden oder dichten die einzelnen Bauteile gegeneinander ab (18a), in dem die Klemmen in den Probenteller geschraubt werden (19).

Der zylindrische Probentiegel besteht bevorzugt aus einer wärmeleitfähigen Keramik, durch dessen Vertikale eine Bohrung geht (20), die dazu dient das Reaktionsgas durch das Probenmaterial aus der Spektroskopiekammer zu leiten. Die Bohrung weitet sich nach oben hin auf ca. 6 mm auf, sodass sie dort als Probenbehälter (21) dient. Durch die Verwendung eines Gitters oder einer inerten Watte (22) wird gewährleistet, dass das zu untersuchende Material im Probenbehälter zurückgehalten wird und dass das Gas dennoch durch die Probe hindurch strömen kann. Die Verwendung von Einsetzen wie beispielsweise maßangefertigte Glasfritten und anderen Durchmessern ist ebenfalls denkbar.

Der Unterbau ist aus Edelstahl gefertigt und enthält am oberen Ende eine Aussparung, in die der Probentiegel eingeführt werden kann. Seitlich unterhalb der Endposition des Probentiegels ist ein handelsüblicher metallgedichteter Gasanschluss (23) angeschweißt. Dieser dient dazu die Gase mit Reaktionsprodukten aus der Spektroskopiekammer zu leiten, nachdem sie die Probe durchströmt haben. Er ist über eine Bohrung (24), die sich in drei Wege aufteilt und in eine Richtung bis an das obere Ende des Unterbaus reicht, über den Probentiegel mit dem Inneren der Spektroskopiekammer verbunden. Das andere Ende der Bohrung führt zu einem ebenfalls angeschweißten metallgedichteten Anschluss, durch den ein Thermoelement (25) bis in die Probenschüttung eingeführt, abgedichtet und fixiert werden kann. Dieses regelt eine in den Unterbau platzierte Heizpatrone (26), sodass eine Temperaturmessung, sowie -regelung auf Reaktionstemperatur direkt in dem Probenmaterial ermöglicht wird. Zur weiteren Überwachung dient ein in dem Unterbau platziertes Thermoelement (27).

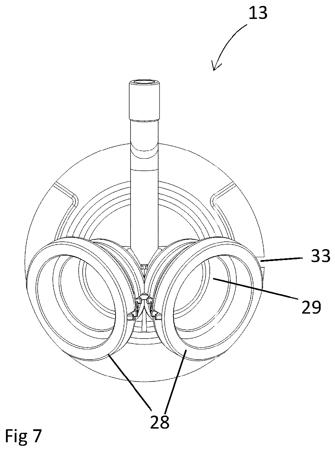

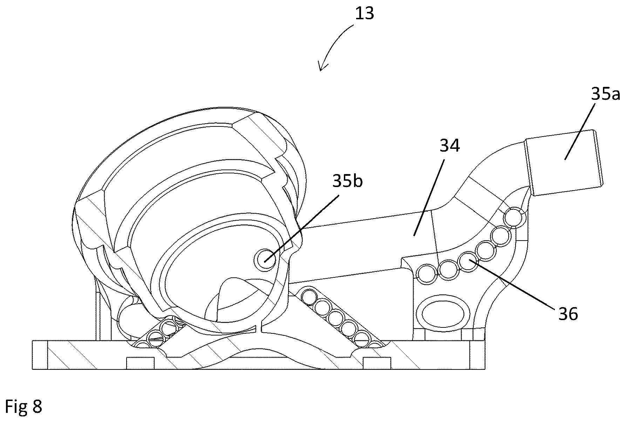

Der Deckel (13, Fig. 7 und 8) besteht ebenfalls bevorzugt aus Edelstahl und weist zwei Kegel auf (28), in die jeweils zwei Bohrungen mit Innengewinden (29) eingearbeitet sind. In diese Bohrungen werden runde infrarotdurchlässige Fenster (30) eingeschraubt, die jeweils über einen Fensterhalter (31), PTFE-Dichtscheibe und O-Ring (32) zum Inneren der Spektroskopiekammer abgedichtet werden. Pro Seite können bis zu zwei Messfenster eingebaut werden, zwischen denen ein kleiner Luftspalt bei höheren Temperaturen als Isolator dient. Geeignete Fenstermaterialien sind beispielsweise KBr, ZnSe und CaF₂. Der Deckel wird mittels Nut (33) so auf dem Probenteller positioniert, dass die IR-Strahlung durch die Messfenster der einen Seite auf die Probe einstrahlt und auf der anderen Seite die diffus-reflektierte Strahlung die Kammer verlassen kann. In den Deckel ist ein Kanal (34) eingearbeitet, an dessen Ende ein handelsüblicher metallgedichteter Gasanschluss (35a) angeschweißt ist. Dieser dient dem Einlass der Reaktionsgase in die Spektroskopiekammer. Er ist so positioniert, dass das Gas unterhalb der Messfenster einströmt (35b) und über kurze Verweilwege durch das Probenmaterial geleitet wird. Große Totvolumina werden auf diesem Wege vermieden. Zur Vermeidung von Kondensation bzw. Ablagerung von kondensierbaren Reaktionsgasen und/oder -produkten sowohl im Deckel als auch an den Messfenstern, kann der Deckel mittels Heizdrähten aktiv beheizt werden. Diese sind in der Abbildung nicht dargestellt, können aber mittels sich an der Außenseite des Deckels befindenden Ösen (36) gleichmäßig um den Deckel und den Kegel gewickelt werden. Eine Temperaturregelung erfolgt dabei über ein zwischen die Kegel platziertes Thermoelement. Der Deckel selbst wird zu Isolationszwecken bevorzugt in eine Hochtemperatursilikonhaube gegossen. Bei der Verwendung von Reaktionsgasen, die an Edelstahl reagieren können, kann der Deckel zuvor mit einem chemisch inerten Material beschichtet werden.

Um ein Überhitzen des Motors zu vermeiden, sind am Probenteller zur verbesserten Wärmeabfuhr Rillen eingearbeitet. Weitere Abnahmen auf dem Teller, insbesondere zwischen den Spektroskopiekammern (37) und nahe der Motoraufnahme (38) unterstützen die Wärmeabfuhr und reduzieren das zu bewegende Gewicht. Bei Reaktionstemperaturen über 300 °C ist es notwendig, die Dichtflächen aktiv zu kühlen. Dies kann durch einen zweigeteilten Probenteller erfolgen, in den schmale Kanäle unterhalb der Dichtflächen von Deckel und oberhalb der Fläche des Unterbaus eingearbeitet sind, durch die ein Kühlmedium beispielsweise Wasser oder bei höheren Temperaturen Silikonöl gespült wird. Über Schlauchanschlüsse, die durch das Gehäuse geführt werden, kann das Kühlmedium durch den Probenteller geführt werden. Darüber hinaus kann zusätzlich bei sehr hohen Reaktionstemperaturen das Material der Klemmplatte aus einem schlecht wärmeleitfähigen Material wie beispielsweise Keramik oder Quarzglas gewählt werden.

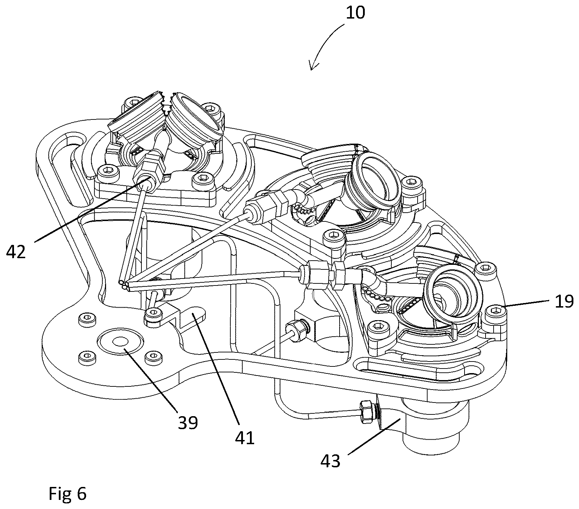

Damit die Spektroskopiekammern (Fig. 6) abwechselnd in den Strahlengang gebracht werden können, ohne den Probenraum öffnen zu müssen, sind diese drei auf einem Probenteller befestigt. Dieser wird mittels einer Aufnahme (39) mit dem Dreh- und Hubmotor (9) verbunden. Der Drehmotor wird dazu genutzt die Kammern im Halbkreis horizontal zu bewegen, sodass diejenige Spektroskopiekammer unter der Spiegeloptik ausgerichtet werden kann, dessen Probe vermessen werden soll. Eine Hubbewegung ist zusätzlich vor und nach der Drehbewegung notwendig, um ein Anschlagen der Kammer gegen die in Messposition sehr eng umfassende Spiegeloptik zu vermeiden. Eine Drehbewegung kann also nur erfolgen, sobald sich die Spektroskopiekammern deutlich unterhalb der Spiegeloptik befinden. Bei den Motoren handelt es sich um präzise Steppermotoren mit sehr hohen Auflösungen, sodass eine Positionierung im µm Bereich ermöglicht wird und reproduzierbar durchgeführt werden kann. Im Gehäuse sind zwei Endschalter (40) platziert, die zur exakten Positionierung als Referenzwert genutzt werden. Dabei kann es sich um mechanische Schalter wie hier dargestellt (41), oder auch optische Schalter wie beispielsweise Lichtschranken handeln.

Zur Gasversorgung der Spektroskopiekammern dient eine nicht dargestellte Versorgungsstation, aus der neben bei Raumtemperatur gasförmigen Edukte auch flüssige oder feste Edukte zunächst in die Gasphase überführt und anschließend der Messzelle zugeführt werden können. Darüber hinaus können über beheizte Transferleitungen auch gasförmige Proben aus einer Reaktionsanlage in die Spektroskopiekammern überführt werden. Der Transfer der Reaktionsgase von der Gasversorgung bzw. von der Reaktionsanlage in die Spektroskopiekammern erfolgte dabei mittels eines speziell angefertigten Heizschlauches. Dieser beinhaltet sechs Einzelleitungen, die von der beheizten Gasversorgungsstation gebündelt zum Gehäuse der Messzelle geleitet und an dieser befestigt werden (4). Innerhalb der Probenraumes bzw. des Gehäuses teilt sich der Heizschlauch auf sechs separate und jeweils aus Solltemperatur beheizte Leitungen auf. Dabei führt pro Spektroskopiekammer jeweils eine Leitung zum Reaktionsgaseinlass am Deckel (42) und eine zum Reaktions-(Produkt)gasauslass am Unterbau der Kammer (43).

Neben der Aufnahme von DRIFTS-Spektren unter Verwendung einer Katalysatorprobe, ist auch die Aufnahme des reinen Gasphasenspektrums der in die Reaktionszelle einströmenden Reaktionsgase von Interesse. Dieses kann vom in situ Probenspektrum des Katalysators abgezogen werden, um ein Resultatspektrum zu erhalten, das lediglich Oberflächenspezies zeigt. Dies ist insbesondere dann von Bedeutung, wenn Banden der Gasphasenmoleküle sich mit denen der Adsorbate überlappen.

Durch den Einsatz der erfindungsgemäßen Messzelle, die insbesondere für die DRIFT-Spektroskopie geeignet ist, können nun anhand von 4 Probenmessungen, von denen jeweils zwei der Aufnahme von Hintergrundspektren und 2 der Aufnahme von Reaktandenspektren dienen, in der Messzelle durchgeführt werden, sodass eine Auswertung anhand der Kubelka-Munk-Funktion ermöglicht wird. Die Aufnahme der Spektren erfolgt dabei unter den exakt gleichen, wie die mit denen im Reaktor herrschenden Bedingungen. Dadurch können sowohl Gasphasenspektren, als auch Oberflächenspezies auf der Katalysatoroberfläche und damit das Reaktionsgeschehen im Reaktor ohne hohe Hintergrundbeiträge sicher bestimmt werden.

Die prinzipielle Vorgehensweise wird nachfolgend erläutert. Die Messfenster für den Ein- und Austritt der verwendeten bzw. der entstandenen Strahlung bestehen aus einem infrarot durchlässigen Material z.B. aus Calciumfluorid (CaF2).

Die Messzelle besteht aus drei Spektroskopiekammern, von denen eine mit einem inerten Material (Weißstandard, z.B. CaF2-Pulver), und zwei mit der im Weißstandard verdünnten Katalysatorprobe befüllt sind. Die mit der Referenzsubstanz gefüllte Spektroskopiekammer dient der Aufnahme des Gasphasenspektrums. Dazu wird vor jeder Gasphasenmessung in dieser Kammer ein temperatur- und druckabhängiges Spektrum mit einem IR-inaktivem Gas (z.B. H2) aufgenommen. Anschließend wird eine aus dem Reaktor entnommene Gasprobe über eine Verbindungsleitung in diese Spektroskopiekammer überführt und ein weiteres Spektrum aufgenommen. Anschließende Subtraktion des Referenzspektrums CaF2/H2 vom letztgenannten Spektrum führt zum Spektrum der entnommenen Gasprobe.

Eine zweite Spektroskopiekammer dient der Aufnahme der Referenzspektren des im Weißstandard verdünnten Katalysators bei vorgegebener Temperatur und Druck und wird dauerhaft mit IR-inaktivem Gas gespült. Eine Aufnahme erfolgt dabei unmittelbar vor Messung in Spektroskopiekammer 3. In die dritte Spektroskopiekammer, welche ebenfalls mit verdünntem Katalysator gefüllt ist, wird eine aus dem Reaktor entnommene Gasprobe geleitet und ein Spektrum aufgenommen. Dabei entspricht die entnommene Gasprobe der Probe, die in die erste Spektroskopiekammer über den reinen Weißstandard geleitet wird.

Durch Subtraktion des Referenzspektrums des Katalysators aus Spektroskopiekammer zwei vom Spektrum aus Kammer drei wird ein Spektrum erhalten, das sowohl Gasphasenmoleküle, als auch Katalysatoroberflächenspezies enthält. Wird von diesem Spektrum das im ersten Schritt erhaltene Spektrum der Gasprobe (Spektroskopiekammer 1) subtrahiert, gelangt man schließlich zu dem Spektrum der Spezies auf der Katalysatoroberfläche, das für das Verständnis der heterogen katalysierten Reaktion wesentlich ist.

Da die 3 Spektroskopiekammern abwechselnd in den IR-Strahl bei völlig identischen Messbedingungen (IR-Quelle, Detektor Probenraum/Gehäuse) bewegt werden können, ist das letztlich erhaltene Spektrum weitgehend frei von der Auswertung störender Hintergrundbeiträge. Darüber hinaus ist sowohl die Darstellung der reinen Gasphase, als auch der Oberflächenspezies voneinander unabhängig möglich.

Zusammenfassend können die wesentlichen Merkmale und Vorteile der erfindungsgemäßen Messzelle wie folgt dargestellt werden:
Referenz und Katalysator werden unter identischen, den Bedingungen im eigentlichen Reaktor entsprechend, gemessen; 3 Spektroskopiekammern gewährleisten Identität von Strahlungsquelle, Detektor und Probenraum bei jeder Messung,
Deckel der Messzelle/Dome mit Gaseinlass direkt unterhalb der Messfenster führt zu kleinem Totvolumen, keine Bypassströmungen; 2 Messfenster pro Seite, Fenster beheizt durch Heizdraht bedeutet keine Kondensation von Edukten oder Produkten an den Messfenstern und dem Dome,
geringer Kontakt zwischen Reaktanten und Metallteilen, Temperaturkontrolle in der Katalysatorschüttung (Probenschüttung), Ausstattung und Anpassung für Isopotenzialspektroskopie.

### Bezugszeichenliste

- 100: Messzelle (DRIFTS-Messzelle)
- 1a-c: Spülgasanschlüsse für Inertgas
- 2: Teleskoparm
- 3: Fenster
- 4: beheizte Gasleitungen
- 5a-c: optisches Spiegelsystem zur Aufnahme von DRIFT-Spektren
- 6: Arretierung
- 7: Servomotor
- 8: Probenteller
- 9: Dreh-/Hub-Aktor
- 10: Spektroskopiekammer
- 11: Unterbau
- 12: Probentiegel
- 13: Deckel
- 14: Klemmplatte
- 15: Klemmen
- 16: Vertiefung
- 17: Passstift
- 18a-c: Hohlraum
- 19: Verschraubung
- 20: Bohrung
- 21: Probenbehälter
- 22: Inerte Watte/Gitter
- 23: Gasanschluss
- 24: Bohrung
- 25: Thermoelement
- 26: Heizpatrone
- 27: Thermoelement
- 28: Kegel
- 20: Bohrung mit Innengewinde
- 30: IR durchlässiges Fenster
- 31: Fensterhalter
- 32: PTFE Dichtscheibe und O-Ring
- 33: Nut
- 34: Kanal
- 35a: Gasanschluss
- 35b: Einströmstelle
- 36: Ösen
- 37: Spektroskopiekammer
- 38: Motoraufnahme
- 39: Aufnahme
- 40: Endschalter
- 41: mechanischer Schalter
- 42: Reaktionsgaseinlass am Deckel
- 43: Reaktionsgasauslass

## Patentansprüche

1. Messzelle (100) zur Untersuchung von Proben mittels elektromagnetischer Strahlung, bevorzugt mit der Diffusen Reflexions-Infrarot-Fourier-Transformations-Spektroskopie, kurz "DRIFT-Spektroskopie", welche Strahlenein- und -austrittsfenster (30), ein optisches Spiegelsystem (5a-c) und einen Probenteller (8) aufweist, wobei die Messzelle (100) umfasst:
Spülgasanschlüsse (1a-c), ein Spiegelsystem zur Aufnahme von DRIFT-Spektren (5a-c), einen Probenteller (8) mit mindestens drei Spektroskopiekammern (10), die auf dem Probenteller befestigt sind, der über eine Aufnahme (39) mit einem Dreh- und Hubmotor (9) verbunden ist, wodurch die Kammern (10) horizontal bewegt und in den Strahlengang gedreht und unter der Spiegeloptik (5a-c) ausgerichtet werden können, und wobei jede der Kammern (10) einen Unterbau (11), einen Probentiegel (12) und einen Deckel (13) aufweist, wobei diese drei Bauteile durch Mittel (14, 15, 19) gasdicht miteinander verbunden und gegenüber der Umgebung abgeschlossen sind, der Probentiegel (12) mit einer Bohrung (20) versehen ist, durch die Reaktionsgas durch das Probenmaterial und aus der Kammer (10) geleitet wird, und jede Kammer (10) einen Deckel (13) mit zwei Kegeln (28) aufweist, in die für elektromagnetische Strahlung, insbesondere für IR-Strahlung, durchlässige Fenster (30) eingesetzt und so angeordnet sind, dass eingestrahlte und die Messzelle verlassende Strahlung durch diese Fenster (30) hindurchtreten können, wobei der Deckel (13) einen Kanal (34) mit einem Gasanschluss (35a) zur Einleitung von Reaktionsgasen aus einem externen Reaktor (42) in die Kammer (10) aufweist, und wobei die Kammer (10) einen Reaktionsgasauslass (43) im Unterbau (11) der Kammer (10) aufweist.

2. Messzelle (100) nach Anspruch 1, **dadurch gekennzeichnet, dass** diese zur Probenaufnahme über gasdichte Leitungen mit einem externen Reaktor verbunden werden kann.

3. Messzelle (100) nach Anspruch 1 oder 2, **dadurch gekennzeichnet, dass** der Gasanschluss (35a) und die Einströmstelle (35b) so angeordnet sind, dass aus einem externen Reaktor zugeführtes Gas direkt unterhalb der Messfenster (30) in die Spektroskopiekammer (10) einströmt.

4. Messzelle (100) nach einem der Ansprüche 1 bis 3, **dadurch gekennzeichnet, dass** der Deckel (13) der Kammern (10) Heizdrähte zur aktiven Beheizung des Deckels und/oder der Fenster (30) aufweist.

5. Messzelle (100) nach einem der Ansprüche 1 bis 4, **dadurch gekennzeichnet, dass** jede Spektroskopiekammer (10) ein Thermoelement (25) aufweist, das bis in die Probenschüttung eingeführt, abgedichtet und fixiert werden kann.

6. Messzelle (100) nach Anspruch 5, **dadurch gekennzeichnet, dass** sich in dem Unterbau (11) der Kammer (10) eine Heizpatrone befindet, die über das Thermoelement (25) geregelt wird.

7. Messzelle (100) nach einem der Ansprüche 1 bis 6, **dadurch gekennzeichnet, dass** diese im Unterbau (11) der Spektroskopiekammer (10) ein Thermoelement (27) aufweist.

8. Verwendung einer Messzelle (100) nach einem der Ansprüche 1 bis 7 zur DRIFT-Spektroskopie von heterogen katalysierten Reaktionen.

9. Verwendung nach Anspruch 8, **dadurch gekennzeichnet**, das die Messzelle (100) als Vorrichtung in der Isopotenzial-Spektroskopie verwendet wird.

10. Verwendung nach Anspruch 8 oder 9, **dadurch gekennzeichnet, dass** die Messzelle (100) mit einem externen Reaktor über gasdichte Leitungen verbunden ist.

11. Verfahren zur Untersuchung heterogen katalysierter Reaktionen mittels der DRIFT-Spektroskopie, **dadurch gekennzeichnet, dass** eine Messzelle (100) nach einem der Ansprüche 1 bis 7 verwendet wird.

12. Verfahren nach Anspruch 11, **dadurch gekennzeichnet, dass** die Untersuchung mittels Isopotenzial-Spektroskopie erfolgt.

## Claims

1. Measuring cell (100) for examining samples using electromagnetic radiation, preferably using DRIFT spectroscopy, which has radiation entry and exit windows (30), an optical mirror system (5a-c) and a sample turret (8) with a mirror system for recording DRIFT spectra (5a-c), wherein the measuring cell (100) comprises: purge gas connections (1a-c), a mirror system for recording DRIFT spectra (5a-c), a sample turret (8) with at least three spectroscopy chambers (10) mounted on the sample turret, which sample turret (8) is connected to a rotary and linear motor via a mount (39) (9), whereby the chambers (10) can be moved horizontally and rotated into the beam path and aligned under the mirror optics (5a-c), and wherein each of the chambers (10) has a base (11), a sample crucible (12) and a lid (13), these three components being connected to each other in a gas-tight manner by means (14, 15, 19) and sealed off from the environment, the sample crucible (12) is provided with a bore (20) through which reaction gas is conducted through the sample material and out of the chamber (10), and each chamber (10) has a lid (13) with two cones (28) in which windows (30) permeable to electromagnetic radiation, in particular IR radiation, are inserted and arranged in such a way that radiation entering and leaving the measuring cell can pass through these windows (30), wherein the lid (13) has a channel (34) with a gas connection (35a) for introducing reaction gases from an external reactor (42) into the chamber (10), and wherein the chamber (10) has a reaction gas outlet (43) in the base (11) of the chamber (10).

2. Measuring cell (100) according to claim 1, **characterised in that** it can be connected to an external reactor via gas-tight lines for sample recording.

3. Measuring cell (100) according to claim 1 or 2, **characterised in that** the gas connection (35a) and the introduction point (35b) are arranged such that gas supplied from an external reactor is introduced into the spectroscopy chamber (10) directly below the measuring windows (30).

4. Measuring cell (100) according to one of claims 1 to 3, **characterised in that** the lid (13) of the chambers (10) has heating wires for actively heating the lid and/or the windows (30).

5. Measuring cell (100) according to one of claims 1 to 4, **characterised in that** each spectroscopy chamber (10) has a thermocouple (25) which can be inserted into the sample bulk, sealed and fixed in place.

6. Measuring cell (100) according to claim 5, **characterised in that** the base (11) of the chamber (10) contains a heating cartridge which is controlled by the thermocouple (25).

7. Measuring cell (100) according to one of claims 1 to 6, **characterised in that** it has a thermocouple (27) in the base (11) of the spectroscopy chamber (10).

8. Use of a measuring cell (100) according to one of claims 1 to 7 for DRIFT spectroscopy of heterogeneously catalysed reactions.

9. Use according to claim 8, **characterised in that** the measuring cell (100) is used as a device in isopotential spectroscopy.

10. Use according to claim 8 or 9, **characterised in that** the measuring cell (100) is connected to an external reactor via gas-tight lines.

11. Method for investigating heterogeneously catalysed reactions using DRIFT spectroscopy, **characterised in that** a measuring cell (100) according to one of claims 1 to 7 is used.

12. Method according to claim 11, **characterised in that** the investigation is carried out using isopotential spectroscopy.

## Revendications

1. Cellule de mesure (100) destinée à l'examen d'échantillons par rayonnement électromagnétique, de préférence avec la spectroscopie infrarouge à transformée de Fourier en réflexion diffuse, pour abréger « spectroscopie DRIFT », laquelle présente des fenêtres d'entrée et de sortie de rayons (30), un système optique à miroirs (5a-c) et une plaque d'échantillon (8), dans laquelle la cellule de mesure (100) comprend : des raccords de gaz de rinçage (1a-c), un système à miroirs pour la réception de spectres DRIFT (5a-c), une plaque d'échantillon (8) avec au moins trois chambres de spectroscopie (10), qui sont fixées sur la plaque d'échantillon, qui est reliée à un moteur de rotation et de levage (9) par le biais d'un logement (39), ce par quoi les chambres (10) peuvent être déplacées horizontalement et tournées dans le trajet des rayons et orientées sous le système optique à miroirs (5a-c), et dans laquelle chacune des chambres (10) présente une embase (11), un creuset d'échantillon (12) et un couvercle (13), dans laquelle ces trois composants sont reliés l'un à l'autre de manière étanche aux gaz par des moyens (14, 15, 19) et isolés par rapport à l'environnement, le creuset d'échantillon (12) est doté d'un perçage (20), à travers lequel du gaz de réaction est conduit à travers le matériau d'échantillon et hors de la chambre (10), et chaque chambre (10) présente un couvercle (13) avec deux cônes (28), dans lesquels des fenêtres (30) perméables au rayonnement électromagnétique, en particulier au rayonnement IR, sont insérées et agencées de telle sorte que le rayonnement entrant et le rayonnement quittant la cellule de mesure peuvent passer à travers ces fenêtres (30), dans laquelle le couvercle (13) présente un canal (34) avec un raccord de gaz (35a) pour l'introduction de gaz de réaction d'un réacteur externe (42) à la chambre (10) et dans laquelle la chambre (10) présente une sortie de gaz de réaction (43) dans l'embase (11) de la chambre (10).

2. Cellule de mesure (100) selon la revendication 1, **caractérisée en ce que** celle-ci peut être reliée à un réacteur externe par le biais de conduites étanches aux gaz pour le prélèvement d'échantillons.

3. Cellule de mesure (100) selon la revendication 1 ou 2, **caractérisée en ce que** le raccord de gaz (35a) et le point d'afflux (35b) sont agencés de telle sorte qu'un gaz amené depuis un réacteur externe afflue directement en dessous des fenêtres de mesure (30) dans la chambre de spectroscopie (10).

4. Cellule de mesure (100) selon l'une quelconque des revendications 1 à 3, **caractérisée en ce que** le couvercle (13) des chambres (10) présente des fils chauffants pour le chauffage actif du couvercle et/ou des fenêtres (30).

5. Cellule de mesure (100) selon l'une quelconque des revendications 1 à 4, **caractérisée en ce que** chaque chambre de spectroscopie (10) présente un thermocouple (25) qui peut être introduit, rendu étanche et fixé jusque dans le dispositif de versement d'échantillons.

6. Cellule de mesure (100) selon la revendication 5, **caractérisée en ce qu'**une cartouche chauffante, qui est régulée par le biais du thermocouple (25), se trouve dans l'embase (11) de la chambre (10).

7. Cellule de mesure (100) selon l'une quelconque des revendications 1 à 6, **caractérisée en ce que** celle-ci présente un thermocouple (27) dans l'embase (11) de la chambre de spectroscopie (10).

8. Utilisation d'une cellule de mesure (100) selon l'une quelconque des revendications 1 à 7 pour la spectroscopie DRIFT de réactions catalysées hétérogènes.

9. Utilisation selon la revendication 8, **caractérisée en ce que** la cellule de mesure (100) est utilisée en tant que dispositif dans la spectroscopie isopotentielle.

10. Utilisation selon la revendication 8 ou 9, **caractérisée en ce que** la cellule de mesure (100) est reliée à un réacteur externe par le biais de conduites étanches aux gaz.

11. Procédé destiné à l'examen de réactions catalysées hétérogènes au moyen de la spectroscopie DRIFT, **caractérisé en ce qu'**une cellule de mesure (100) selon l'une quelconque des revendications 1 à 7 est utilisée.

12. Procédé selon la revendication 11, **caractérisé en ce que** l'examen se fait par spectroscopie isopotentielle.
